# FASCICULE DE BREVET EUROPEEN

(11) **EP 0 671 839 B1**
(45) Date de publication et mention de la délivrance du brevet: **06.05.1998**
(21) Numéro de dépôt: 95400298.6
(22) Date de dépôt: 13.02.1995
(51) Int. Cl.: H04L 29/06

(54) **Procédé de traitement de données issues d'une couche d'adaptation à la transmission selon un mode de transfert asynchrone de type ATM**
Verarbeitungsverfahren von Daten einer Übertragungsanpassungsschicht eines asynchronen Übertragungsmodus des ATM Typs
Method for processing data coming from a transmission adaptation layer of an asynchronous transfer mode which is of ATM type

(30) Priorité: 14.02.1994 FR 9401644
(43) Date de publication de la demande: 13.09.1995
(73) Titulaire: FRANCE TELECOM, 75015 Paris (FR)
(72) Inventeur: Le Guigner, Marc, Cabinet Ballot-Schmit, F-94230 Cachan (FR); Simon, Jean-Louis, Cabinet Ballot-Schmit, F-94230 Cachan (FR); Le Moal, Jacques, Cabinet Ballot-Schmit, F-94230 Cachan (FR)
(74) Mandataire: Schmit, Christian Norbert Marie

(56) Documents cités:
- US-A- 5 136 584
- SIGCOMM '88 SYMPOSIUM: COMMUNICATION ARCHITECTURES AND PROTOCOLS, 16 Août 1988, STANFORD, US pages 134 - 145 C.SONG ET AL 'OPTIMIZING BULK DATA TRANSFER PERFORMANCE: A PACKET TRAIN APPROACH'

## Description

La présente invention concerne un procédé de traitement de données appelées cellules, issues de la couche d'adaptation pour le transfert selon un mode de transmission asynchrone de type ATM (Asychronous Transfer Mode).

On rappelle que la transmission en mode ATM se fait par transfert de blocs d'information de longueur constante. La quantité élémentaire d'information utile transmise est de 48 octets, le bloc d'information transmis en ATM est dénommé cellule et identifié par une étiquette de 5 octets appelée en-tête. La longueur totale d'une cellule est donc de 53 octets. On rappelle également que le protocole de transmission selon un mode asynchrone tel que le mode ATM fait appel à différentes couches pour le transport des informations et, notamment, à des couches d'adaptation au mode ATM telles que les couches AAL 3 et 4 définies par les recommandations I362 et I363 du CCITT.

La couche d'adaptation permet à l'émission, de découper un message en morceaux transportables par des cellules ATM puis, à la réception, de récupérer les cellules constitutives d'un même message parmi le flux des cellules ATM reçues afin de reconstruire le message.

La réception du flux ATM se fait au moyen d'un terminal de réception apte à traiter les cellules afin de reconstituer les messages et de pouvoir les exploiter. Les terminaux d'émission/réception actuels réalisent cette segmentation et ce réassemblage de messages dans une pré-mémoire de travail. Une fois un message reçu, traité et réassemblé, le processeur du terminal récepteur en est informé et doit réaliser le retransfert dudit message dans sa propre mémoire pour pouvoir l'exploiter. Ce type de réalisation est relativement simple à concevoir mais, impose une étape de transfert supplémentaire aux données avec toutes les ressources matérielles additionnelles qu'il convient, c'est à dire, des mémoires intermédiaires, des dispositifs de lecture/écriture et de contrôle.

La présente invention a pour objet un procédé de traitement de données qui permet d'obtenir un réassemblage des cellules en message directement dans la mémoire de travail du processeur hôte (c'est à dire du terminal de réception) et cela sans étape intermédiaire. Les données constitutives du message sont stockées continûment selon l'invention dans cette mémoire au fur et à mesure de la réception sur le canal ATM. Ainsi, l'invention permet de réaliser une fonction de réassemblage des cellules d'un même message en économisant une étape intermédiaire de recopie de données. Les données des messages sont de plus directement exploitables par le processeur du terminal, sans aucune opération supplémentaire de remise en ordre.

On pourra se reporter à l'état de la technique constitué par le document D1 : US-A-5 136 584 et par le document D2 : SYMPOSIUM SIGCOMM '88, pages 134-145 (SONG et al.) du 16 août 1988. Dans D1, la gestion de la mémoire ne comporte pas de tri des cellules. Dans D2, la réservation d'un emplacement mémoire est toujours de taille maximale.

La présente invention a pour but de remédier à cet inconvénient et a plus particulièrement pour objet un procédé de traitement de données selon la revendication 1.

Pour cela on a au préalable choisi un ou plusieurs seuils permettant de répertorier les messages en plusieurs catégories en fonction de leur taille, ces seuils donnant les limites entre les tailles des messages.

Le tri des cellules consiste à lire le contenu du champ d'information donnant la taille requise du message en cours de réception dans l'en-tête de la sous-sous-couche CPCS qui est située dans la première cellule du message et à,

Comparer ce contenu au seuil pour affecter le message en cours de réception à l'une des zones mémoire.

Selon une autre caractéristique de l'invention, les seuils sont programmables,

Selon une autre caractéristique de l'invention, l'enregistrement de façon continue des cellules d'un même message comporte les étapes suivantes :

Enregistrer dans une zone mémoire un contexte de réception de la cellule comportant des champs d'en-tête de la couche de transfert et la couche d'adaptation,

Identifier la cellule reçue par lecture des champs de l'en-tête (chemin virtuel, voie virtuelle et identification d'un multiplexage) et, comparaison du contenu de ces champs au contenu des champs de cellules de message déjà en cours de réception, pour reconnaître si la cellule est une cellule de début, de continuation, ou de fin de message et lui réserver un emplacement dans la zone mémoire choisie,

Transférer les données de la cellule pour les enregistrer dans l'emplacement mémoire réservé dans la zone affectée au message auquel elle appartient.

La présente invention sera mieux comprise à l'aide de la description qui va suivre et qui est donnée à titre d'exemple illustratif et non limitatif et en regard des dessins sur lesquels :
- La figure 1 représente le format d'une cellule transmise selon le mode de transfert asynchrone tel que le mode ATM,
- La figure 2 représente le format d'un message à transmettre au niveau de la sous-sous-couche CPCS de transfert de données,
- La figure 3 représente le format des message à transmettre après passage dans la sous-couche SAR d'adaptation au mode ATM,
- La figure 4 représente la couche de transfert ATM,
- La figure 5 représente de façon plus détaillée le format du message dans la sous-sous-couche CPCS,
- La figure 6 représente de façon plus détaillée le format du message dans la sous-couche d'adaptation SAR,
- La figure 7 représente les étapes essentielles du procédé conforme à l'invention,
- La figure 8 représente les étapes permettant d'enregistrer de façon continue les cellules d'un même message dans le cas de cellules de début ou de cellules isolées,
- La figure 9 représente les étapes permettant d'enregistrer de façon continue les cellules d'un même message dans le cas de cellules de continuité ou de fin de message,
- La figure 10 représente le système de mise en oeuvre du procédé selon l'invention.

On rappelle que la technique de transmission en mode ATM est basée sur la transmission des informations à l'aide de paquets de données de longueur fixe appelées cellules.

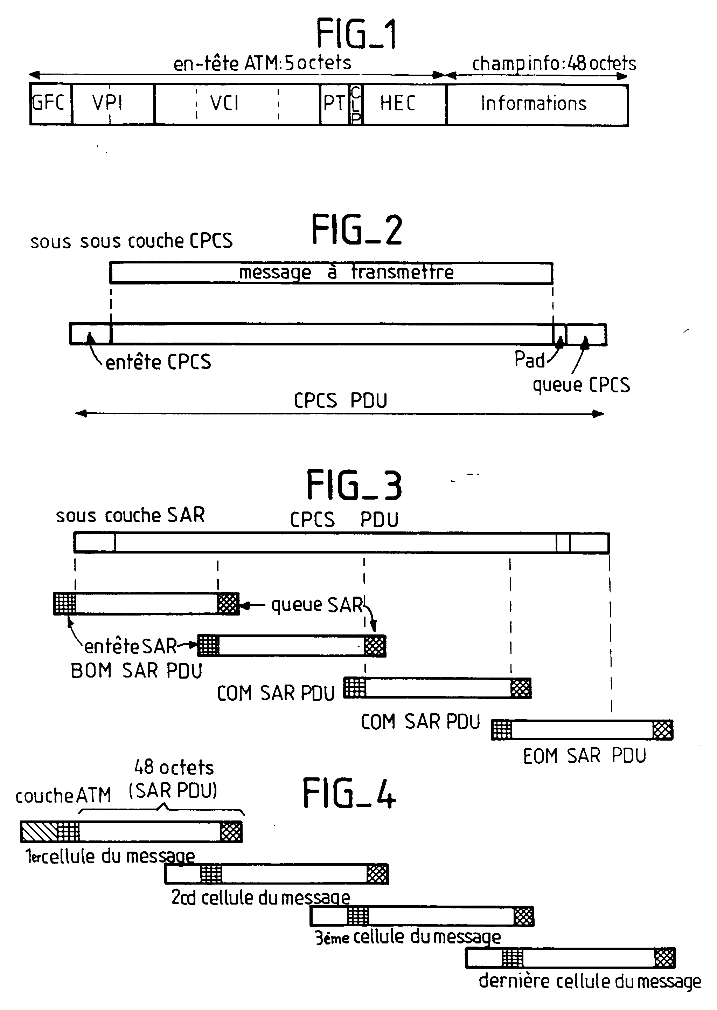

Chaque cellule possède un champ d'en-tête de 5 octets et un champ d'information de 48 octets selon le format qui a été représenté sur la figure 1. Les numéros de conduits virtuels et de voies virtuelles sont contenus dans les champs VPI et VCI de la cellule. La cellule comporte en outre un indicateur de type de cellule contenu dans le champ PT (Payload Type) et un indicateur de priorité CLP (Cell Loss Priority). Le champ HEC correspond à un code correcteur d'erreurs.

Les couches AAL3 et 4 d'adaptation en mode ATM possèdent des champs situés dans la zone d'information de la cellule. Ces couches sont spécifiques au transfert de données.

L'adaptation en mode ATM consiste pour un message, tel que représenté sur la figure 2, à : principalement ajouter des champs d'information au début et la fin de ce message à travers une sous-sous-couche dénommée CPCS. Ces champs de début et de fin sont nommés "en-tête" CPCS et "queue CPCS". Le champ PAD permet uniquement de rajouter des octets dits de bourrage pour aligner le champ ainsi obtenu CPCS PDU à un multiple de 32 bits.

L'ensemble CPS PDU est ensuite découpé pour former les segments de la sous-couche SAR, auxquels on ajoutera également un en-tête et une queue. La sous-couche SAR est représentée sur la figure 3. L'en-tête du premier segment comporte une indication de début de message; les segments suivants comportent une indication de continuité de message et, le dernier segment comporte une indication de fin de message.

Ces segments sont ensuite mis au format ATM par le passage dans la couche ATM qui consiste à rajouter un en-tête ATM à chacun d'eux. Chaque ensemble d'information ainsi obtenu constitue des cellules selon le format ATM, tel que représenté sur la figure 4.

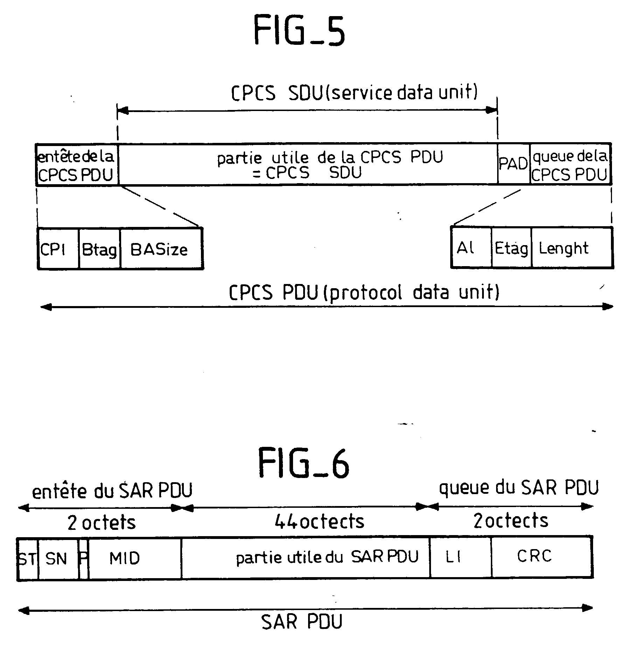

On va maintenant détailler le format de la sous-sous-couche CPCS telle que représentée à la figure 5. Le message à transmettre se trouve dans le champ partie utile de cette couche, ce champ étant dénommé CPCS SDU. L'en-tête comporte 3 champs, détaillés ci-dessous :
**CPI** : est utilisé pour établir la valeur de certains champs CPCS PDU.
**BTAG** : permet le test de bonne association en-tête/queue, il doit être identique au champ ETAG.
**BASIZE** : il indique au récepteur la taille maximale requise pour la réception du CPCS PDU.
**PAD** : ce sont des octets de bourrage.
**AL** : permet d'aligner la queue du CPS PDU à 32 bits
**ETAG** : comme BTAG
**LENGTH** : ce champ donne la taille de la partie utile du CPS PDU.

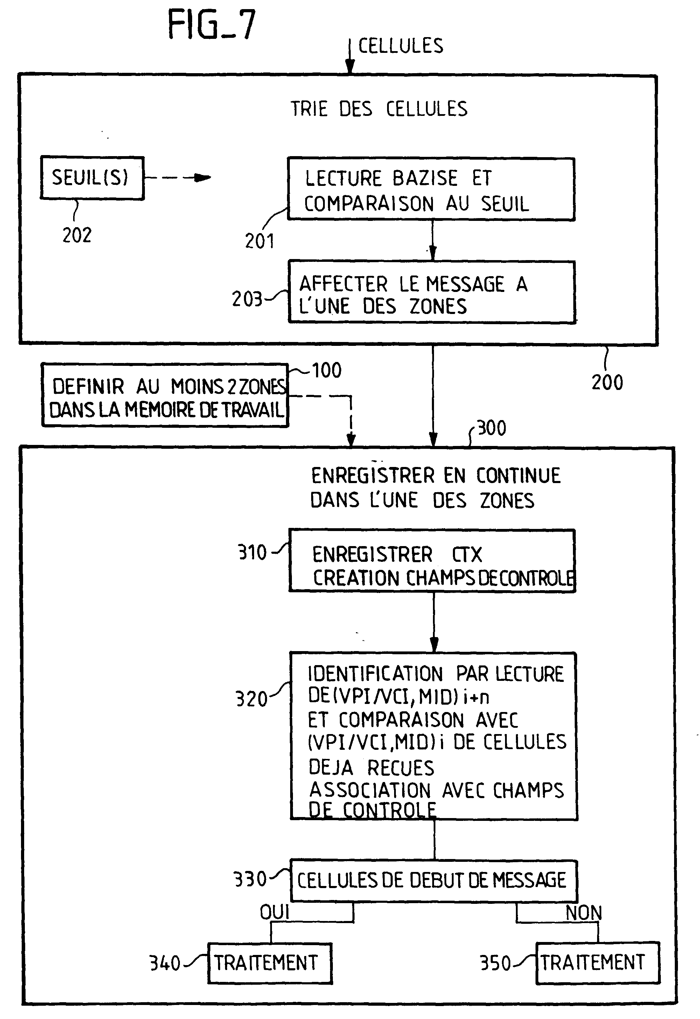

La figure 6 représente d'une façon détaillée la sous-couche SAR.

Comme cela a été dit, le CPCS PDU, correspondant au message à émettre, est tronçonné en une suite de SAR SDU qui seront elles-mêmes insérées dans les parties utiles des SAR PDU. On a donc un en-tête comportant les champs détaillés ci-dessous :
**ST** : indique le SAR PDU (c'est à dire la cellule) comme étant un début de message BOM, une continuation de message COM, la fin d'un message EOM ou un message d'une seule cellule SSM.
**SN** : ce champ permet de numéroter modulo 16 le flux du SAR PDU d'une CPCS PDU.
**P** : ce champ permet d'assigner un niveau de priorité parmi deux pour chaque valeur du champ MID.
**MID** : ce champ permet le multiplexage de plusieurs connexions CPCS sur une seule connexion ATM.
**LI** : ce champ indique le nombre d'octets d'information SAR SDU que comprend le champ partie utile de la SAR PDU.
**CRC** : le contenu de ce champ est calculé sur l'intégralité du SAR PDU et permet la détection d'erreurs bits par SAR PDU.

Les 48 octets du SAR PDU constituent le champ d'information de la cellule ATM.

La description qui va suivre maintenant est faite en regard des figures 7 à 10.

Selon le procédé conforme à l'invention, on réassemble les cellules en message directement dans la mémoire MW du processeur hôte MP, encore dénommé terminal de réception TR, sans étape intermédiaire. Les données constitutives du message sont stockées continûment dans cette mémoire au fur et à mesure de la réception sur le canal T (ATM). Ainsi, la fonction de réassemblage est réalisée en économisant une étape intermédiaire de recopie des données comme cela était le cas dans l'état de la technique. Les données des messages sont de plus directement exploitables par le processeur hôte sans aucune opération supplémentaire de remise en ordre.

Les étapes essentielles du procédé sont représentées par les blocs 100, 200 et 300 de la figure 7.

A cette fin, conformément au procédé de l'invention, le réassemblage consiste tout d'abord à pré-réserver des emplacements dans des zones mémoire Z1, Z2, CTX de la mémoire MW du système hôte en début de réception de chaque message.

Une première solution dans l'état de la technique (voir D2) peut consister à réserver à chaque fois la taille maximale possible pour un message. La solution selon l'invention consiste à réserver uniquement ce que l'on aura besoin par message.

Selon un mode préféré de réalisation, on choisit de réserver une zone Z1 de la mémoire de travail MW pour des emplacements réservés à des messages considérés comme des messages de taille importante et une deuxième zone Z2 de cette mémoire de travail MW pour des emplacements réservés à des messages de taille plus petite (bloc 100, figure 7).

Le procédé consiste alors à trier les cellules (bloc 200, figure 7) au fur et à mesure de leur réception en fonction de la taille requise pour le message auquel elles appartiennent.

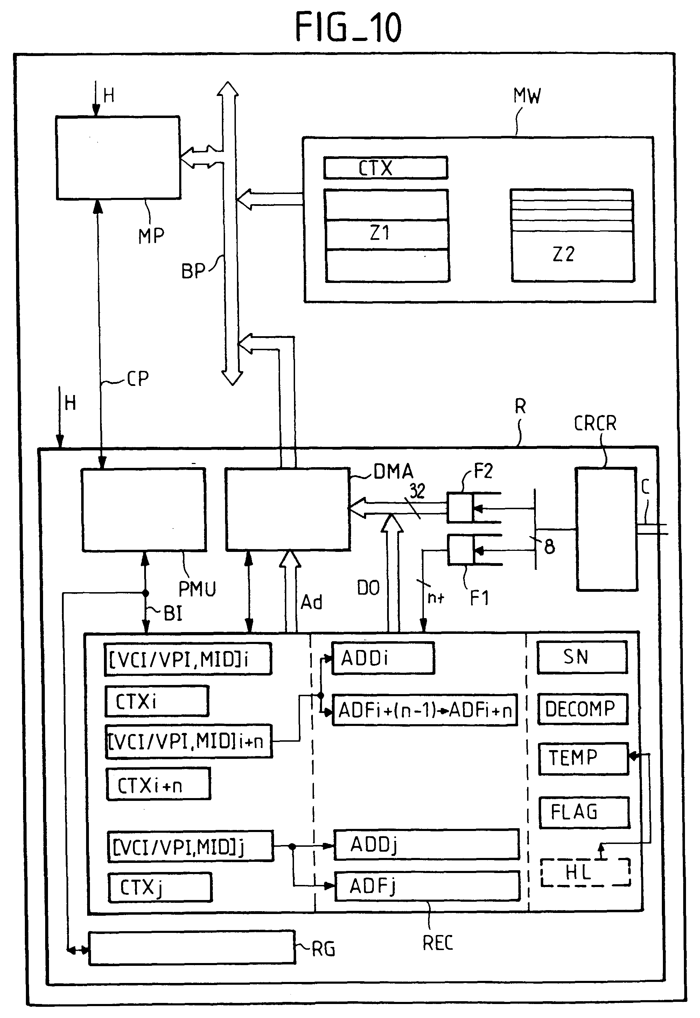

La taille du message auquel appartiennent les cellules est donnée par le champ BASIZE de la première cellule du message (bloc 200). Le contenu de ce champ est comparé au seuil S. Si la valeur du champ BASIZE est supérieure à un seuil S donné, (seuil qui peut être programmable), les données de ce message sont transférées à des emplacements de la zone réservée aux messages de taille importante sinon, ces données sont transférées à des emplacements de la zone réservée aux messages de petite taille (bloc 203). Ces zones portent les références Z1 et Z2 sur la figure 10.

La valeur du seuil S est choisie de manière à être adaptée à la distribution des tailles des messages à transférer et donc au type de service pour lequel le système sera utilisé.

Le procédé consiste ensuite à enregistrer en continu les cellules constitutives d'un même message dans l'une des zones choisies pour le message (bloc 300 de la figure 7).

Pour réaliser cet enregistrement continu, on enregistre un contexte réception CTX qui correspond à des informations placées dans l'en-tête ATM et dans l'en-tête SAR.

On crée des champs de contrôle que l'on associe à un message donné et qui vont permettre au terminal de réception d'assurer l'enregistrement en continu des cellules de ces messages (bloc 310). On identifie la cellule par lecture du triplé VPI VCI MID et comparaison avec les triplés se trouvant déjà dans les contextes réception enregistrée (bloc 320).

On examine ensuite si la cellule est une cellule de début de message (bloc 330). Puis, on réalise des traitements distincts selon qu'il s'agit d'une cellule de début de message ou non, afin de connaître l'adresse à laquelle doivent être enregistrées les données dans la zone prévue pour la réception du message (blocs 340 et 350).

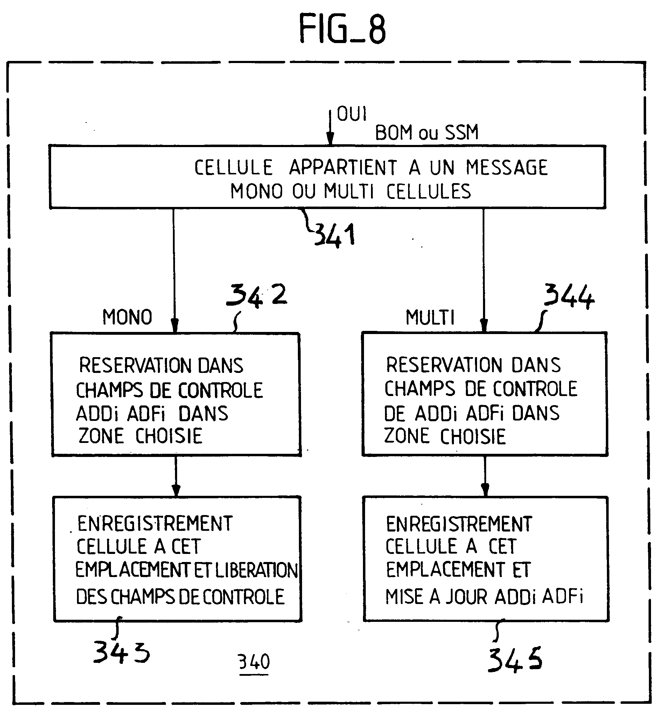

On va maintenant détailler les différentes étapes permettant d'enregistrer les données utiles d'une cellule en continu dans la zone choisie pour le message et dans le cas où cette cellule est une cellule de début de message. (On pourra se reporter au schéma de la figure 8).

Pour savoir si la cellule est une cellule de début de message ou non, on lit dans le contexte de réception le contenu du champ ST. Lorsque le champ indique la valeur BOM ou SSM et que l'on est en présence d'un triplé VPI VCI MID nouveau (qui ne se trouve pas déjà dans le contexte réception), on a bien le début de la réception d'un nouveau message. On distingue ensuite la cellule selon qu'il s'agit d'une cellule appartenant à un message mono- ou multicellule (bloc 341).

Lorsque la cellule i est une cellule isolée, le champ ST contient la valeur SSM. On va réserver alors un emplacement mémoire dans la zone Z2 et cela en inscrivant une adresse de début ADDi et une adresse de fin ADFi dans les champs de contrôle réservés aux adresses (bloc 342).

Pour réaliser le transfert des données de la cellule dans la zone choisie, on lit les adresses de l'emplacement mémoire réservé et, on écrit les données à cet emplacement 343.

Lorsque le contenu du champ ST est à une valeur BOM, alors la cellule i appartient à un message multicellule. On réserve un emplacement dans la zone mémoire choisie en écrivant une adresse de début ADDi et une adresse de fin ADFi dans les champs de contrôle réservés à l'adresse (bloc 344). Lors du transfert des données de la cellule on lit le contenu de ces champs d'adresse pour adresser la zone mémoire choisie et on écrit les données à l'emplacement correspondant. On met ensuite à jour le champ adresse de fin (bloc 345).

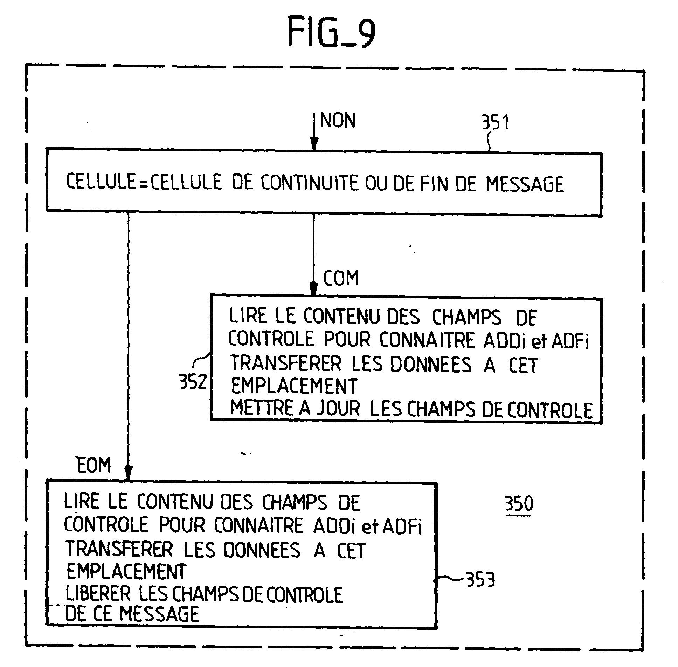

On va maintenant détailler le traitement opéré dans le cas où une cellule i est une cellule de continuité ou de fin de message (bloc 351, figure 9).

Dans le cas où la cellule est une continuation de message, le contenu du champ ST comporte l'information COM. Le triplet VCI VPI MID pour cette cellule i est associé au champ de contrôle d'adresse de début et de fin. L'adresse ADFi+ (n-1) de la cellule précédente a été mise à jour et est passée à la valeur ADFi+n. Cette adresse de fin donne l'adresse de début de l'emplacement mémoire dans lequel vont pouvoir être transférées des données de la cellule (i+n).

Pour le transfert de ces données, on lit cette adresse dans le champ de contrôle d'adresse correspondant et, on écrit les données à l'emplacement correspondant à cette adresse dans la zone choisie.

On met ensuite à jour le champ de contrôle d'adresse de fin (bloc 352).

Dans le cas où la cellule est une fin de message, le champ ST contient la valeur EOM. L'enregistrement des données de la cellule se fait comme précédemment décrit. En revanche, il n'y a pas de mise à jour des champs de contrôle pour l'adresse; ces champs sont libérés et transférés en mémoire MW. Ils peuvent être alors utilisés pour le message suivant (bloc 353).

A ce stade,avant tout transfert de données, on vérifie que la taille du message est compatible avec l' emplacement réservé dans la zone choisie.

En pratique, on associe le triplet à des champs de contrôle du récepteur SN,DECOM,TEMP,FLAG.
- On lit la valeur du champ SN correspondant au numéro du flux de la sous-couche de transfert (SAR PDU) et on l'écrit dans une variable que l'on incrémentera modulo N à chaque réception d'une nouvelle cellule ayant le même triplet (VCI, VPI, MID)
- On réserve un champ ADDi pour écrire l'adresse de début de l'emplacement réservé dans la zone de réception du message,
- On réserve un champ ADFi pour écrire l'adresse de fin de cet emplacement,
- On réserve un champ DECOM pour le décomptage des cellules.Le contenu de ce champ est choisi de manière à correspondre à un nombre de cellules correspondant à la taille du message.
- On réserve un champ TEMP de temporisation. Ce champ est initialisé à une valeur donnée et décrémenté par une horloge HL pour terminer la réception de messages pour lesquels l'information de fin serait perdue.
- On réserve un champ FLAG de drapeau d'erreur. Ce champ indique à la fin de réception d'un message l'éventuelle occurrence d'une erreur. Une erreur apparaîtra dans le cas d'une fin de message obtenue par expiration de la temporisation, dans le cas du débordement de l'emplacement réservé, dans le cas d'une erreur de séquentialité du champ SN ou dans le cas ou le code correcteur d'erreur montre qu'il y a erreur.

Le système, représenté sur la figure 10, permet de mettre en oeuvre le procédé selon l'invention. Ce système est apte à prendre en charge les transferts de données avec la mémoire de travail MW du terminal grâce à des accès DMA (Direct Memory Access)- en rafale, en séparant "les grands" et "les petits" messages. Il permet de plus de réaliser des opérations sur plusieurs messages différents simultanément quelle que soit la valeur de leur identifiant (VPI, VCI, MID).

Le système permet la gestion des différents champs associés aux cellules, contrôle leur validité et communique ces différents résultats aux couches supérieures comme cela a été décrit. Le module REC transfère les données vers la mémoire de message MW par bloc d'une partie utile de cellule, en devenant maître des bus d'adresses et de données BP de la mémoire du système MW hôte.

L'unité CRCR reçoit les données du circuit d'adaptation ATM (canal C), sépare les informations utiles (44 ou 48 octets, versés dans la pile Fifo F2) des informations SAR et ATM (4 octets SAR, 4 octets de la couche ATM [GFC, VPI, VCI, PT, CLP]), calcule le CRC et le compare au CRC reçu, extrait le BaSize, décide s'il faut utiliser un emplacement "petit" ou "grand" et, présente à l'unité de réception REC des demandes de traitement, le contexte réception étant en attente dans la pile Fifo F1.

L'unité CRCR fonctionne avec l'horloge octet réception délivrée par le circuit d'adaptation ATM; le reste du circuit fonctionne avec l'horloge générale H. Le changement de régime d'horloge s'effectue exclusivement à travers les Fifos F1 et F2, qui doivent être "asynchrones" (indépendance totale entre les horloges de lecture et d'écriture).

L'unité REC utilise des moyens de mémorisation incluant une mémoire associative lui permettant de retrouver, pour un couple VPI/VCI-MID donné, l'existence et le numéro d'un canal; elle utilise aussi une RAM, adressée par le numéro ci-dessus, pour retrouver les "contextes réception". Cette unité effectue, grâce à ces informations, les vérifications nécessaires (séquencement des champs ST, continuité des champs SN) et concatène les segments d'un même message dans l'emplacement de la zone mémoire choisie (écriture via le DMA). De plus, cette unité gère une temporisation pour la réception de chaque message.

L'unité DMA gère les opérations de lecture/écriture dans la mémoire des messages. Elle effectue deux sortes d'échanges :
- le plus prioritaire est l'écriture d'un segment d'information reçu : transfert de 44 octets, soit 11 mots qui sont pris dans la Fifo "données reçues" (Fifo F2 sur le schéma); lorsque le bloc réception décide de "jeter" une cellule, c'est le bloc DMA qui est chargé d'extraire 44 octets de la Fifo sans rien écrire dans la mémoire des messages (on parle alors de "purge" par le DMA).
- en deuxième priorité on trouve l'écriture des contextes réception dans l'emplacement tournant des contextes réception, soient 4 mots de 16 bits, lus dans la mémoire de contextes de l'unité réception.

L'unité PMU assure l'interface entre le module R et le bus BP du microprocesseur MP hôte : pilotage des signaux bidirectionnels, exécution des opérations de lecture/écriture registres demandées par le microprocesseur MP et des resets associés.

L'unité RG de registres comporte des registres de commande, d'interruption et de status communs à l'ensemble des unités.

Le bus (Ad) est utilisé par l'unité réception REC pour indiquer au DMA l'adresse de début de transfert. Le bus DO sert à transmettre les données reçues (Fifo F2 vers DMA) ou les contextes réception (unité REC vers DMA). Les échanges ont lieu sur ce dernier bus au rythme sporadique de 25 millions de mots de 32 bits/sec, soit 800 Mb/s en vitesse de pointe.

Entre les unités CRCR et les Fifos, les données sont échangées par octets au rythme maximal de 19,44 millions de mots de 8 bits par seconde, soit 155,5 Mb/s.

Le bus BI permet au microprocesseur MP de lire ou d'écrire tous les registres internes.

Dans la Fifo F2, on a n x
(44 octets d'informations);

Dans la Fifo F1, on a le n x
(le "contexte réception"), à savoir n fois :
- **VCI/VPI** : 16 bits/8 bits
- **ST** : 2 bits
- **SN** : 4 bits
- **MID** : 10 bits
- **LI** : 6 bits
- **EC** : 1 bit ("erreur sur le CRC")
- **T** : 1 bit (cellule reçue)
- **TM** : 1 bit ("taille du message" :
   0 => petit emplacement,
   1 => grand emplacement) **au total : 49 bits.**

En pratique on va dimensionner la Fifo F1 à 4 mots de 49 bits (ou à toute autre largeur inférieure, pour éviter les bus trop larges) afin de stocker 4 cellules.

## Revendications

1. Procédé de traitement de données issues d'une couche d'adaptation à la transmission de messages sous la forme de flux de cellules sur un réseau de transfert asynchrone de type ATM, les cellules comportant un en-tête suivi d'un champ information, lesdites cellules étant reçues par un terminal récepteur (TR) ayant une mémoire de travail (MW), caractérisé en ce qu'il comporte les étapes suivantes :
- Définir au moins deux zones (Z1, Z2) dans la mémoire de travail (MW) du terminal, pour y enregistrer les messages selon leur taille,
- Trier les cellules (200, CRC) au fur et à mesure de leur réception en fonction de la taille requise pour le message auquel elles appartiennent,
- Réserver un emplacement ayant la taille du message c'est-à-dire correspondant uniquement à ce que l'on aura besoin par message (342, 344), dans la zone mémoire affectée à la taille du message, en inscrivant une adresse de début et de fin (ADDi, ADFi) dans un champ de contrôle,
- Enregistrer de façon continue (300, DMA) les cellules constitutives d'un même message directement dans l'emplacement réservé au message dans la zone mémoire affectée à la taille du message .

2. Procédé selon la revendication 1, caractérisé en ce qu'il consiste :
- Au préalable, à choisir un ou plusieurs seuils (S, 202) permettant de répertorier les messages en plusieurs catégories en fonction de leur taille, ces seuils donnant les limites entre les tailles des messages.

3. Procédé selon la revendication 1 ou 2, caractérisé en ce que les seuils (S) sont programmables.

4. Procédé selon l'une quelconque des revendications 1 à 3, caractérisé en ce que le tri des cellules consiste à :
- Lire le contenu du champ d'information (201, BAZISE) donnant la taille requise du message en cours de réception dans l'en-tête de la sous-sous-couche de transfert de la première cellule du message,
- Comparer ce contenu au seuil (201) pour affecter le message en cours de réception à l'une des zones mémoire.

5. Procédé selon l'une quelconque des revendications précédentes, caractérisé en ce que l'enregistrement de façon continue des cellules d'un même message comporte les étapes suivantes :
- Enregistrer (310) dans une zone mémoire un contexte (CTX) de réception des cellules du flux reçu comportant des champs d'en-tête de la couche de transfert ATM et la couche d'adaptation SAR,
- Identifier (320) la cellule reçue par lecture des champs de l'en-tête, chemin virtuel, voie virtuelle (VPI/VCI, MID)i+n et identification d'un multiplexage et, comparaison du contenu de ces champs au contenu des champs (VPI/VCI, MID)i de cellules de message déjà en cours de réception, pour reconnaître si la cellule est une cellule de début, de continuation, ou de fin de message et lui réserver un emplacement dans la zone choisie.
- Transférer les données de la cellule pour les enregistrer (343, 345) dans l'emplacement mémoire réservé dans la zone affectée au message auquel elle appartient.

6. Procédé selon la revendication 5, caractérisé en ce que l'enregistrement d'une cellule comprend les étapes suivantes :
a) dans le cas d'une cellule de début de message (330, 340),
- on enregistre dans la zone de contexte (CTX) du message le triplet formé par les contenus des champs chemin virtuel (VPI), voie virtuelle (VCI) et identification du multiplexage (MID),
- on associe (342) à ce triplet la valeur de champ de contrôle (ADDi, ADFi) pour le récepteur,
- on transfère (343) les données de la cellule dans l'emplacement mémoire réservé dans la zone choisie pour la réception de ce message,
b) dans le cas où l'on a détecté une cellule (COM) de continuation de message (330,350), les champs de contrôle pour le récepteur ayant été créés,
- on lit le contenu des champs (ADDi,ADFi),
- on transfère la donnée à cet emplacement,
- on modifie (352) le contenu de ces champs pour les mettre à jour,
c) dans le cas où l'on a détecté une cellule (EOM) de fin de message (330, 350),
- on lit le contenu des champs (ADDi,ADFi),
- on transfère les données du message dans l'emplacement mémoire réservé dans la zone choisie pour ce message,
- on libère les champs de contrôle de ce message.

7. Procédé selon la revendication 6, caractérisé en ce que l'association d'un triplet à des champs de contrôle du récepteur comporte les étapes suivantes :
- lire la valeur du champ (SN) correspondant au numéro du flux de la sous-couche de transfert (SAR PDU) et l'écrire dans une variable que l'on incrémentera modulo N à chaque réception d'une nouvelle cellule ayant le même triplet (VCI, VPI, MID)
- réserver un champ pour écrire l'adresse de début de l'emplacement réservé dans la zone de réception du message (ADDi),
- réserver un champ pour écrire l'adresse de fin de cet emplacement (ADFi),
- réserver un champ pour le décomptage des cellules (DECOMP),
- réserver un champ de temporisation (TEMP),
- réserver un champ de drapeau d'erreur (FLAG).

## Patentansprüche

1. Verarbeitungsverfahren von Daten einer Übertragungsanpassungsschicht in Form eines Zellenflusses über ein asynchrones Übertragungsnetzwerk des ATM-Typs, wobei die Zellen einen Kopf bzw. Vorspann umfassen, gefolgt von einem Informationsfeld, und empfangen werden von einem Empfangsterminal (TR) mit einem Arbeitsspeicher (MW),
**dadurch gekennzeichnet,**
daß es die folgenden Schritte umfaßt:
- Definieren von wenigstens zwei Zonen (Z1, Z2) in dem Arbeitsspeicher (MW) des Terminals, um dort die Nachrichten nach ihrer Größe abzuspeichern,
- Sortieren der Zellen (200, CRC), eine nach der anderen bei ihrem Empfang, in Abhängigkeit von der Größe, die für die Nachricht, zu der sie gehören, erforderlich ist,
- Reservieren eines Platzes von der Größe der Nachricht, d.h. nur entsprechend dem, was man pro Nachricht benötigt (342, 344), in der der Größe der Nachricht zugeordneten Speicherzone, indem man eine Beginn- und eine Endadresse (ADDi, ADFi) in ein Kontrollfeld schreibt,
- kontinuierliches Aufzeichnen (300, DMA) der ein und dieselbe Nachricht bildenden Zellen direkt in dem für die Nachricht reservierten Platz in der der Größe der Nachricht zugeordneten Speicherzone.

2. Verfahren nach Anspruch 1, dadurch gekennzeichnet, daß es darin besteht:
im voraus einen oder mehrere Schwellenwerte zu wählen, die ermöglichen, die Nachrichten entsprechend ihrer Größe nach mehreraen Kategorien zu indizieren, wobei diese Schwellenwerte Grenzen zwischen den Größen der Nachrichten angeben.

3. Verfahren nach einem der Ansprüche 1 oder 2, dadurch gekennzeichnet, daß die Schwellenwerte (S) programmierbar sind.

4. Verfahren nach einem der Ansprüche 1 bis 3, dadurch gekennzeichnet, daß das Sortieren der Zellen darin besteht:
- den Inhalt des Informationsfelds zu lesen (201, BAZISE), der die erforderliche Größe der gerade empfangenen Nachricht im Vorspann bzw. Kopf der Unter-unter-Übertragungsschicht der ersten Nachrichtenzelle angibt,
- diesen Inhalt mit dem Schwellenwert (201) zu vergleichen, um die gerade empfangene Nachricht einer der Speicherzonen zuzuordnen.

5. Verfahren nach einem der vorangehenden Ansprüche, dadurch gekennzeichnet, daß die kontinuierliche Aufzeichnung der Zellen derselben Nachricht folgende Schritte umfaßt:
- Aufzeichnen (310) eines Vorspannfelder der ATM-Übertragungsschicht und der SAR-Anpassungsschicht enthaltenden Empfangskontextes (CTX) der Zellen des empfangenen Flusses in einer Speicherzone,
- Identifizieren (320) der empfangenen Zelle durch Lesen der Vorspannfelder Virtueller Pfad, Virtueller Kanal (VPI/VCI, MID)i+n und Identifikation eines Multiplexing und Vergleich des Inhalts dieser Felder mit dem Inhalt der Felder (VPI/VCI, MID)i der schon im Empfang befindlichen Nachrichtenzellen, um zu erkennen, ob die Zelle eine Beginn-, Fortsetzungs- oder Endzelle der Nachricht ist und ihr einen Platz in der gewählten Zone zu reservieren.
- Übertragen der Daten der Zelle, um sie in dem Speicherplatz (343, 345) aufzuzeichnen, welcher in der der Nachricht zugeordneten Zone reserviert ist, zu der sie gehört.

6. Verfahren nach Anspruch 5, dadurch gekennzeichnet, daß die Aufzeichnung einer Zelle die folgenden Schritte umfaßt:
a) im Falle einer Nachrichtbeginnzelle (330, 340),
- zeichnet man in der Kontextzone (CTX) der Nachricht das durch die Inhalte der Felder Virtueller Pfad (VPI), Virtueller Kanal (VCI) und Multiplexing-Identifikation (MID) gebildete Tripel auf,
- ordnet man (342) diesem Tripel den Wert des Kontrollfelds (ADDi, ADFi) für den Empfänger zu,
- überträgt man (343) die Daten der Zelle in den in der gewählten Zone für die Aufnahme dieser Nachricht reservierten Speicherplatz,
b) für den Fall, daß man eine Nachrichtfortsetzungszelle (COM) (330,350) detektiert hat und die Kontrollfelder für den Empfänger geschaffen wurden
- liest man den Inhalt der Felder (ADDi,ADFi),
- überträgt man die Daten zu diesem Platz,
- modifiziert man (352) den Inhalt dieser Felder, um sie zu aktualisieren,
c) für den Fall, daß man eine Nachrichtendezelle (EOM) (330,350) detektiert hat,
- liest man den Inhalt des Felds (ADDi,ADFi),
- überträgt man die Daten der Nachricht in den Speicherplatz, der in der für diese Nachricht gewählten Zone reserviert ist.
- macht man die Kontrollfelder dieser Nachricht frei.

7. Verfahren nach Anspruch 6, dadurch gekennzeichnet, daß das Verbinden eines Tripels mit Kontrollfeldern des Empfängers die folgenden Schritte umfaßt:
- Lesen des Werts des Felds (SN), der Flußnummer der Übertragungs-Unterschicht (SAR PDU) entsprechend, und ihn einschreiben in eine Variable, die man bei jedem Empfang einer neuen Zelle mit demselben Tripel (VCI, VPI, MID) modulo N inkrementiert,
- Reservieren eines Felds zum Schreiben der Anfangsadresse des in der Empfangszone der Nachricht reservierten Platzes (ADDi),
- Reservieren eines Felds zum Schreiben der Endadresse dieses Platzes (ADFi),
- Reservieren eines Zellenzählfelds (DECOMP),
- Reservieren eines Verzögerungs- bzw. Verweilzeitfelds (TEMP),
- Reservieren eines Fehlerkennzeichenfelds (FLAG).

## Claims

1. A method of processing data from an adaptation layer for transmitting messages in the form of flows of cells on an asynchronous transfer network of the ATM type, the cells having a header followed by a data field, said cells being received by a receiver terminal (TR) with a working memory (MW), characterised in that it consists in the following steps:
- At least two zones (Z1, Z2) are defined in the working memory (MW) of the terminal so that the messages can be saved therein depending on their size,
- The cells (200, CRC) are sorted as and when they are received depending on the size required for the message to which they belong,
- A location is reserved to match the message size, i.e. corresponding only to what the message (342, 344) will require, in the memory zone allocated for that message size by writing a start address and an end address (ADDi, ADFi) in a control field,
- The cells making up a same message are stored continuously (300, DMA) directly in the location reserved for the message in the memory zone allocated for that message size.

2. A method as claimed in claim 1, characterised in that it consists in:
- Choosing beforehand one or more thresholds (S, 202) that will allow the messages to be documented in several categories depending on their size, these thresholds determining the limits between the message sizes.

3. A method as claimed in claim 1 or 2, characterised in that the thresholds (S) can be programmed.

4. A method as claimed in any one of claims 1 to 3, characterised in that the cell sort consists in:
- Reading the contents of the data field (201, BAZISE) indicating the size required for the message being received in the header of the transfer sub-sublayer of the first cell of the message,
- Comparing these contents with the threshold (201) to assign the message being received to one of the memory zones.

5. A method as claimed in any one of the preceding claims, characterised in that the procedure of continuously saving cells of a same message comprises the following steps:
- Saving (310) to a memory zone a reception context (CTX)for the cells in the flow comprising the header fields of the transfer layer ATM and the adaptation layer SAR,
- Identifying (320) the cell received by reading the header, virtual path and virtual circuit fields and a multiplexing identifier (VPI/VCI, MID)i+n and comparing the contents of these fields with the contents of the message already being received in order to ascertain whether the cell is a beginning of, continuation of or end of message cell and reserving a location for it in the chosen zone,
- Transferring the data from the cell in order to save them (343, 345) in the memory location reserved in the zone allocated to the message to which it belongs.

6. A method as claimed in claim 5, characterised in that the procedure for saving a cell consists of the following steps:
a) in the case of a beginning of message cell (330, 340),
- the triplet consisting of the contents of the virtual path (VPI), virtual circuit (VCI) and multiplexing identifier (MID) fields are saved in the context (CTX) zone of the message,
- this triplet is linked (342) with the control field value (ADDi, ADFi) for the receiver,
- the cell data are transferred (343) to the memory location reserved in the zone chosen to receive this message,
b) if a continuation of message cell (COM) is detected (330, 350), the control fields having been created for the receiver,
- the contents of the (ADDi, ADFi) fields are read,
- the data are transferred to this location,
- the contents of these fields are amended (352) in order to update them,
c) if an end of message cell (EOM) is detected (330, 350),
- the con tents of the (ADDi, ADFi) fields are read,
- the message data are transferred to the memory location reserved in the zone chosen for this message,
- the control fields are released from this message.

7. A method as claimed in claim 6, characterised in that the procedure for associating a triplet with control fields of the receiver consists of the following steps:
- reading the value of the field (SN) corresponding to the flow number of the transfer sub-layer (SAR PDU) and writing it in a variable which will be incremented by a modulus N each time a new cell having the same triplet (VCI, VPI, MID) is received,
- reserving a field in which to write the start address of the location reserved in the zone in which the message is received (ADDi),
- reserving a field in which to write the end address of this location (ADFi),
- reserving a field for counting back the cells (DECOMP),
- reserving a temporary field (TEMP),
reserving an error flag field (FLAG).
